**Europäisches Patentamt**

(19) **European Patent Office**

**Office européen des brevets**

(11) Publication number: **0 091 773**
**B1**

(12) **EUROPEAN PATENT SPECIFICATION**

(45) Date of publication of patent specification: **22.07.87**　　(51) Int. Cl.⁴: **F 16 L 33/22**

(21) Application number: **83301917.7**

(22) Date of filing: **06.04.83**

(54) **Coupling for pressure hose.**

<table>
<tr><td>(30) Priority: <b>12.04.82 US 367782</b></td><td>(73) Proprietor: <b>Schmidt, Gerhard Siegfried Eric<br>208 Duplex Avenue<br>Toronto Ontario, M5P 2B2 (CA)</b></td></tr>
<tr><td>(43) Date of publication of application:<br><b>19.10.83 Bulletin 83/42</b></td><td></td></tr>
<tr><td></td><td>(72) Inventor: <b>Schmidt, Gerhard Siegfried Eric<br>208 Duplex Avenue<br>Toronto Ontario, M5P 2B2 (CA)</b></td></tr>
<tr><td>(45) Publication of the grant of the patent:<br><b>22.07.87 Bulletin 87/30</b></td><td></td></tr>
<tr><td>(84) Designated Contracting States:<br><b>AT BE CH DE FR GB IT LI LU NL SE</b></td><td>(74) Representative: <b>Collingwood, Anthony Robert<br>et al<br>GEORGE FUERY & COMPANY<br>Whitehall Chambers 23 Colmore Row<br>Birmingham B3 2BL (GB)</b></td></tr>
<tr><td>(56) References cited:<br><b>DE-A-2 220 919<br>DE-A-2 611 233<br>DE-U-7 408 610<br>DE-U-7 914 106<br>FR-A- 840 387<br>US-A-3 402 253</b></td><td></td></tr>
</table>

Courier Press, Leamington Spa, England.

## Description

The invention relates to a coupling for a pressure hose, and is of particular significance in connection with pressure hoses used in the assembly of fluid control systems in which machinery or process controls are actuated by fluid pressure.

Typically couplings according to the invention are used in pressure systems where the pressure hose is carrying pneumatic fluidic or hydraulic pressure for controlling various devices. In such systems a large number of different pressure hoses are provided, connecting different process or equipment controllers, valves, relays and the like, with a source of pressure. Usually such systems are assembled by hand, and the hose is cut to length as desired. The valves, controllers and the like are formed with one or more female threaded bores, and male threaded screw-in couplings are fastened therein. The lengths of hose are then secured to the screw-in couplings by means of which they are thus connected to the valves, controllers and other members. In the past, there have been numerous designs of such couplings. Generally speaking, they must meet three general requirements. They must be simple and easy to assemble by hand. They must provide a good pneumatic or hydraulic seal, within the ranges of pressure for which the system is intended. They must be cheap to manufacture and sell, since they will be used in large numbers.

Generally speaking, however, the prior art couplings have been of relatively complex multi-part construction, inevitably leading to a relatively costly assembly. In addition, the multi-part construction of such earlier couplings has introduced problems in providing a good seal.

In such couplings, it is particularly desirable to provide a screw threaded body portion, which may for instance be screw threaded into the particular recess to which the hose is to be connected, and the hose itself being then introduced into the body portion, and fastened and sealed without the use of further threaded fasteners. It is somewhat disadvantageous if a second threaded fastener is used, since the tightening down of such a further threaded fastener may cause the hose to twist, or may in some cases damage the hose or coupling as a result of over tightening and is for these reasons undesirable.

In order to overcome this problem, it has been proposed to provide a hose coupling of this type, having a linear hose clamping or fastening action. Such a coupling consisted of a threaded metallic body, and a plastic sleeve having a plurality of fingers extending around the hose. A sliding collar was provided around the exterior of such fingers with a wedging action so that when the collar was drawn along the sleeve away from the threaded body, it squeezed the fingers tightly together against the hose. When it is pushed in the opposite direction towards the threaded body, it released the fingers allowing the hose to be removed. In this system, the arrangement of the sleeve and fingers was manufactured separately from the threaded body, and was held in position in the threaded body in a relatively flimsy unsatisfactory manner, and required the use of a separate O-ring to provide a pneumatic seal.

The fingers were held in place in a recess in the metal body by a simple friction or push fit. Often the parts became disassembled in shipping or storage. Once assembled with the hoses, however, any movement of the hose, particularly a bending movement close to the coupling, was likely to separate the fingers from the metal body. In addition, since this unit was a multi-part construction, the manufacturing cost was relatively high.

Another proposal using said linear action is shown in DE—U—7914106 in which a threaded body portion includes integral hose clamping fingers and a sliding collar surrounding the fingers is provided with an interior taper along its length which increases in diameter in the direction of the threaded portion, this taper coacting with ridge means around the exterior of the fingers at their axially outer ends. In this arrangement the collar is drawn along the sleeve towards the threaded body to tighten the fingers onto the hose. The ridge means is provided with an external taper reducing in diameter in the inward direction to coact with the extreme outer end of the collar to resist outward displacement thereof when it is pushed fully home onto the body past the extremities of the fingers. The fingers have internal tooth formations to engage the outer surface of the hose and resist axial displacement of the latter. While this construction is less complex, cheaper, and requires no separate O-ring or other seal the full clamping action requires a linear movement of the collar over a substantial axial distance somewhat greater than the effective length of the fingers, the whole of the progressive squeezing effect being provided by the taper of the collar alone coacting only with finger extremities.

In the present invention, as defined by the appended claims, the outer end portion of collar means of the coupling is provided with an interior angled surface and the ridge means of the fingers includes a complementary outer angled surface at its outer end both said angled surfaces being axially outwardly tapered to provide a wedging action for squeezing the fingers together as the collar means is slid axially inwards toward its clamping position, and the outer end portion of the collar further includes a non-tapered interior surface at its outer end and the ridge means includes a complementary non-tapered exterior surface at its inner end which coact to keep the fingers squeezed together without exerting any axial forces on the collar means when the latter is at the clamping position.

In a particularly preferred form of the invention, the hose engaging teeth are formed in a diagonal manner extending along the axis of the fingers, somewhat in the manner of coarsely pitched threads thereby to provide an elongated hose clamping surface.

In a further specific form of the invention, the threaded body portion is provided with a tapered male threaded end, for seating in a tapered female threaded bore, the taper of the nail threaded portion on the threaded body having a wider angle than the taper of the threads in the female threaded bore whereby to provide an effective seal when the same are threaded together.

A further and related objective of the invention is to provide a rotatable Tee junction, having a hose connection portion, and a rotatable body received in such hose connection portion, and a head on such rotatable body by means of which it may be engaged and threadedly engaged in another fitting.

In another form of the invention, the fingers are provided with an additional annular recess, and the collar is provided with a mating annular ridge, so that once the hose is clamped between the fingers, the collar is retained by engagement of the rib in the recess.

The various features which characterize the invention are pointed out with particularity in the claims annexed to and forming a part of this disclosure. For a better understanding of the invention, its operating advantages and specific objects attained by its use, reference should be had to the accompanying drawings and descriptive matter in which there are illustrated and described preferred embodiments of the invention.

Figure 1 is a longitudinal section of a hose coupling according to the invention;

Figure 2 is a view corresponding to Figure 1 with the fingers squeezed together;

Figure 3 is a section of an alternative embodiment;

Figure 4 is a section of a further alternative form;

Figure 5 is a section of another feature of the invention;

Figure 6 is a partial section of a further alternative feature of the invention;

Figure 7 is an exploded perspective illustration of a rotatable Tee junction in accordance with the invention; and

Figure 8 is a section along the line 8—8 of Figure 7.

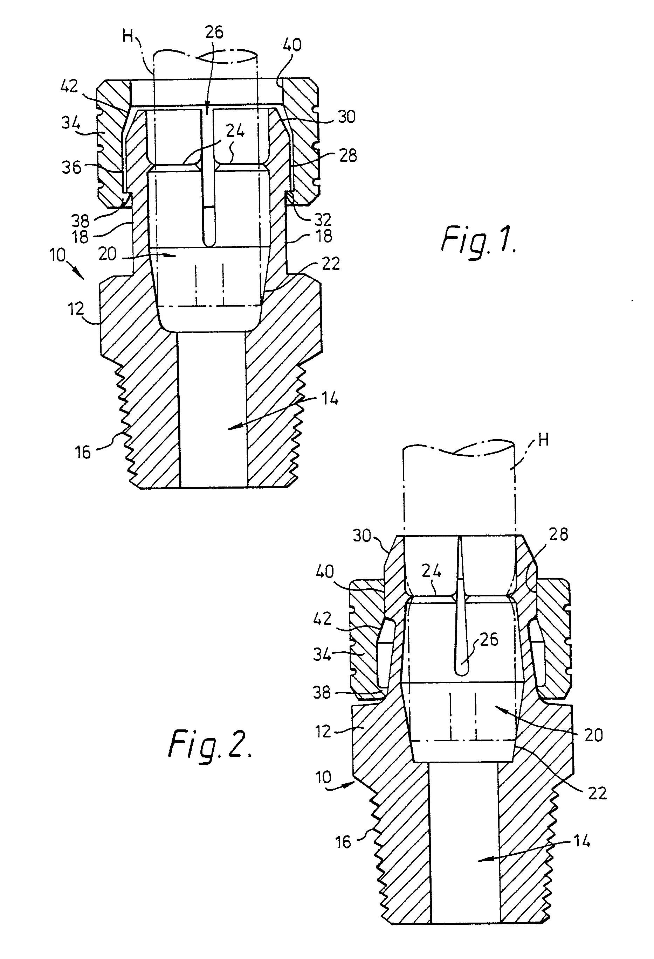

Referring now to Figure 1, the hose coupling is shown generally by the reference numeral 10, and a portion of hose shown in phantom as H is shown inserted therein. The coupling 10 will be seen to comprise a main body portion 12, defining a central axial bore 14, and having a male threaded portion 16 thereon. As shown in Figure 1, the male threaded portion is tapered, in a manner of a pipe thread.

The outer end of the main body portion 12, that is to say the end remote from the threads 16, is provided with a plurality of, in this case, four, separate spaced apart fingers 18, extending axially along the axis of the hose coupling 10.

Fingers 18 are shown as having a generally partially cylindrical cross-section, so as to to define essentially the outline of a cylindrical tubular structure. Each of the fingers is to a certain degree flexible, and they are formed in this case integrally with the main body 12 out of a single piece of material. Preferably such material will be an injection moulded thermoplastic, but the invention does not exclude any other material from which such hose couplings can conveniently be made. It will be noted that the fingers 18 define an interior bore 20 which is approximately the same diameter as the outside diameter of the hose H, this being considerably greater than the interior diameter of the bore 14 of the main body 12. At the transition between the fingers 18 and the main body 12, a sealing sleeve 22 is formed by the interior surfaces of body 12 which at this point becomes somewhat thicker in a gradually inwardly tapering manner smaller than the outside diameter of hose H, and terminates at shoulder 23.

This gradual taper, at the transition between the fingers and the main body, provides a tapered sealing sleeve into which the end of the hose H can be forced during assembly. In this way, the sleeve 22 achieves a squeezing or pinching effect upon the outside surfaces of the end of hose H, so as to form a good pneumatic or hydraulic seal at this point, without the use of additional sealing means, such as O-rings and the like which were necessary in the past.

Within the interior of fingers 18, there are provided inwardly directed tooth members 24, which are relatively sharp edged, and are intended to bite into the outer surface of the hose H, and securely clamp it in position. Such teeth 24 in the embodiment of Figure 1 are simply in the form of an interior annular ridge coming to a sharp point as shown in Figures 1 and 2.

Fingers 18 are separated from one another by axial slots 26 extending from the free ends of fingers 18 downwardly therebetween, and terminating just prior to the sealing sleeve 22. In this way, it is possible for the fingers 18 to flex inwardly to clamp the hose H in position, without interfering with one another (as shown in Figure 2).

The size, shape and number of fingers 18 and their related slots 26, is of course capable of relatively greater variation. Thus there may be more or less than four fingers, and they may be curved or arcuate in shape, or flattened in section. Slots 26 may be of various shapes and widths. The only criterion is that fingers 18 should preferably be capable of flexing inwardly so that their related teeth shall grip the hose.

On the exterior of the free ends of each of fingers 18, there is provided a clamping ridge with a non-tapered surface 28, and having an outwardly directed angled wedging surface 30 thereon at the free end thereof, and having an inwardly directed collar stop 32 thereon, oppositely directed relative to the surface 30.

In order to provide a squeezing action on the fingers, there is provided a sliding clamping collar 34, which is an annular member formed separately from the fingers 18. Collar 34 is provided with an enlarged annular interior recess 36, shaped so as to receive and conform to the shape of the ridge surface 28 on the fingers 18.

An inwardly directed annular retaining ring 38 on collar 34 engages with the collar stop 32, to prevent the collar 34 from being slid off the fingers 18, once it has been initially assembled. Ring 38 has an inwardly directed angled surface 39.

At the outwardly directed end of collar 34, there is a reduced diameter clamping ring surface 40 provided, and a tapering cam or wedging surface 42 extends between the reduced diameter clamping surface 40, and the enlarged annular recess 36. In accordance with the invention, the tapering surface 42 is angled at essentially the same angle as the wedging surface 30 on ridge 28 on the fingers 18.

As shown on Figure 2, when the clamping collar 34 is pushed inwardly, i.e., towards the main body 12, it will cause the cam surface 42 to engage the wedging surfaces 30 on fingers 18, and gradually and progressively squeeze the fingers 18 together. When pushed fully home, the clamping surface 40 will overlie the annular ridge surface 28, thereby securely holding the fingers 18 in their inwardly squeezed position as shown in Figure 2.

In this position, the hose H is seen to be nipped by the teeth 24, thereby securely holding it in position.

It is an important feature of the invention that this wedging or clamping action is achieved by an inward movement of the collar 34 relative to the fingers 18.

All that is necessary is for the free end of the hose H to be cut to the desired length, and it is then pushed down the open bore 20 defined by the fingers 18 into the sleeve 22. The hose H is then pushed firmly into the sleeve 22 until the free end engages the hose stop surface 23, thus squeezing it and making a good seal. The collar 34 is then slid inwardly or downwardly along fingers 18, towards main body 12, thereby squeezing fingers 18 tightly around hose H and clamping it firmly in position.

In fact, both the insertion of the hose H and the inward movement of the clamping ring 34 can be carried out with the same hand, since the direction of the clamping movement of the ring 34 is the same direction as the direction of the force being applied to the hose H to hold it firmly clamped in position.

It is thus possible for an operator to first of all thread a number of main bodies 12 into position in their appropriate valves, or in their connector blocks (not shown), after which the hoses H can then simply be inserted, and clamped in position by movements all of which take place in the same direction.

It is thus possible for the operator to work quickly and effectively in a relatively confined space, without special training.

Initial assembly is made easy by cooperation between wedging surface 30 on the ridge, and angled surface 39 of ring 38. The collar 34 can thus be simply forced over the ridge, but cannot readily be removed.

At the same time, since there are only two parts to the entire coupling 10, namely the integral main body 12 and fingers 18 constituting one part and the sliding collar 34 constituting the other part, it is not possible for the coupling to become disassembled even during substantial misuse. Flexing of the hose, once inserted, cannot cause separation of the fingers from the main body, since they are of one-piece construction.

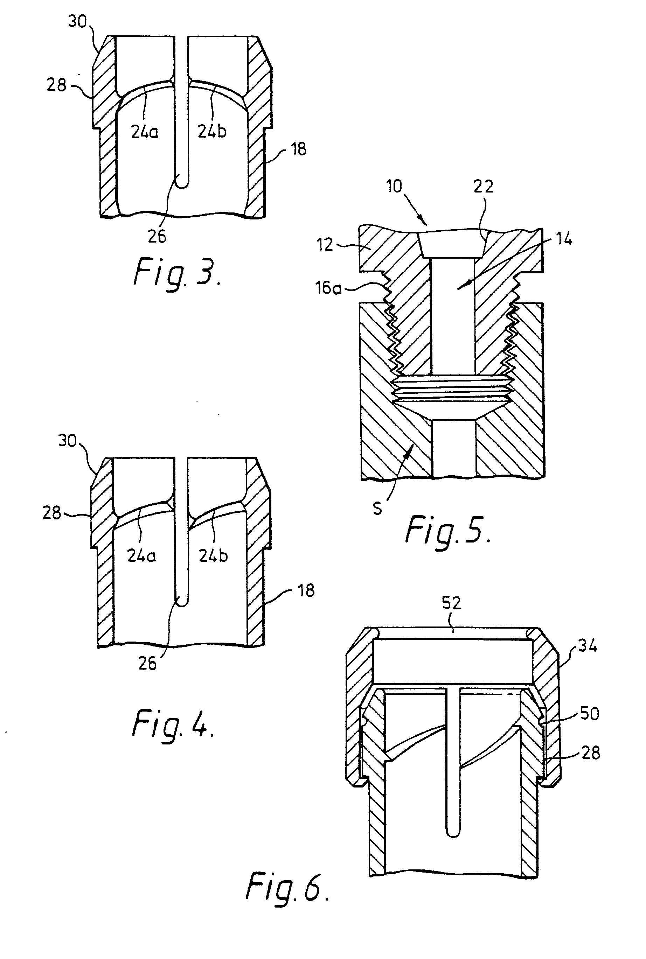

As shown in Figures 3 and 4, the teeth 24 of fingers 18 as shown in Figures 1 and 2 may be replaced by diagonally angled teeth 24a, 24b. The angling of such teeth has certain advantages in that it will essentially prevent the hose H from being rotated or twisted. In addition, it will clamp the hose H over a greater length, thereby providing a greater frictional engagement of the hose H.

In accordance with a further feature of the invention, it is also possible to improve the manner of sealing between the male threaded portion 16, and the standard female threaded seating into which it is fastened.

As shown in Figure 5, a typical female threaded socket is shown generally as S. Such a socket S may be formed in a valve or relay or other operating member, or may be part of a connector block, all of these members being well known in the art relating to pneumatic controls or other hydraulic applications, and requiring no further description.

Depending upon the particular design of the system such sockets S may be threaded with a conventional parallel sided thread, in which case of course the male threads on the hose couplings 10 will also have to correspond and be formed with a male threaded portion 16 having parallel sides so as to fit. In this case, some form of sealant must be provided usually in the form of either a sealing ring or sealing tape, or in some cases a form of glue filler or mastic may be applied.

In many cases, the female threads are formed in a tapering manner in the form of a pipe thread. In this case, male threads 16 on the hose coupling 10 are also arranged in a tapered manner in the manner of a pipe thread, so as to match with the tapering threads of the female socket S.

In this case also, even though the threads tighten up much more securely, it is still necessary to provide some form of sealant, usually in the form of the conventional plastic sealing tape which is wound around the threads.

In fluidic control systems, such sealants can cause problems. Small particles of sealant escape from the threads and enter the hoses and valves and are a serious source of malfunction.

In order to avoid any of the problems associated with the use of this kind of sealant, or indeed any other sealant, the invention now provides that the male threaded portion shown generally as 16a in Figure 5, on the main body 12, shall be provided with a taper which is greater than that of the female threaded portion S. In addition, since the material of the main body 12 is usually a thermo-plastic material it is capable of being deformed relatively easily.

The male threaded portion 16 is thus inserted into the female threaded portion S and will be fastened by rotating it no more than two or three times. At this point, the threads will lock solid, and a further slight rotation of the main body 12 will cause complete binding between the male thread and the female thread, and a certain degree of deformation of the thermoplastic male threads 16a will in fact take place. It is found that this achieves a substantially perfect seal at least for the purposes of the type of equipment under consideration, without the use of any extra sealant.

Obviously, if such a structure is overtightened then the threads are destroyed and the hose coupling 10 will have to be replaced.

However, after a little practice, it is possible for an operator to readily determine exactly when a seal has been achieved, and at what point further tightening wil cause rupturing of the threads themselves.

In this way, the assembly of the entire structure is made much quicker, with substantial savings in overall costs.

As best shown in Figure 6, an optional feature of the invention provides an interlocking annular ring 50, formed in clamping surface 28, adjacent the forward end thereof, and a complementary mating locking rib 52 formed on the interior surface of the collar 34.

The ribs 52 will seat in the recess 50 when the collar is pressed home into clamping engagement, and will thereby hold it more or less securely against shaking loose, although it will obviously be capable of being dislodged if sufficient manual pressure is applied.

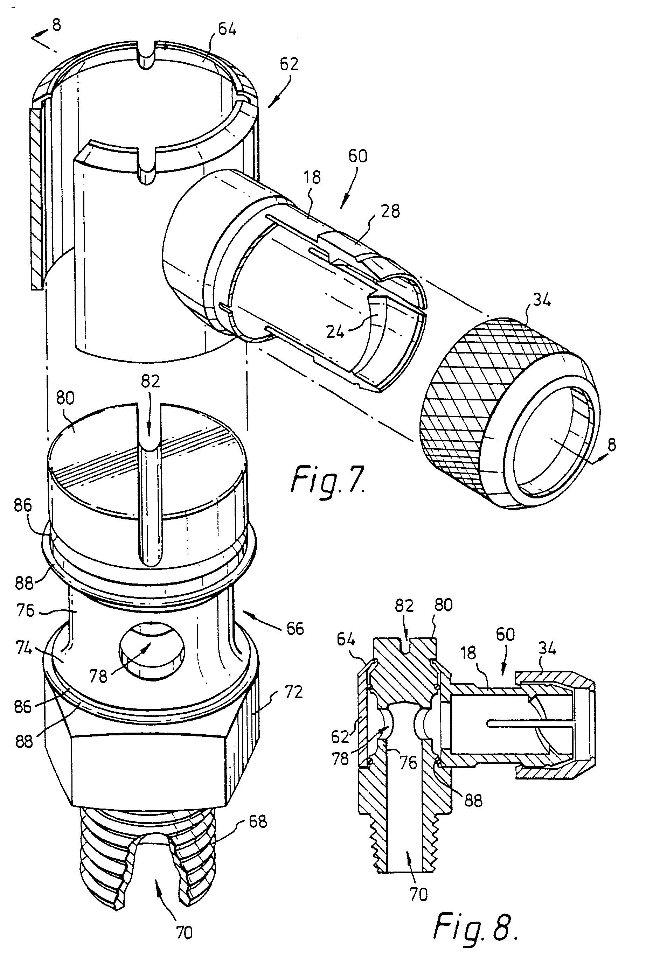

In many cases, when using such hose couplings it is desirable to provide a Tee junction unit, as best shown in Figures 7 and 8.

Such Tee junction units are usually made so that the hose connection portion on one side is rotatable relative to the other for purposes to be described.

Thus the Tee junction unit according to the invention will be seen to comprise a hose connection portion indicated as 60, having clamping fingers 18, a clamping ridge, and a clamping sleeve 34 all as shown in connection with Figures 1 to 5. Clamping teeth 24 or angled clamping teeth such as 24A and B are located on the inside surface of the fingers 18 in the manner described.

The fingers and sliding collar also have interior sliding wedging surfaces as described above.

The nose connection member 60 is, however, formed with a generally transverse coupling sleeve of cylindrical shape indicated as 62, which is open at both ends, and communicates with the interior of coupling 60 for passage of fluid.

At an end, designated at the upper end of the cylindrical sleeve 62 there is provided an inturned locking and holding ring 64, and the other end of such sleeve 62 defines a regular cylindrical shape.

The other portion of the Tee junction comprises a rotatable body portion 66. Body portion 66 has a typical tapered threaded portion 68 at one end, and a central bore 70 for communication of fluid.

Hexagonal drive surfaces 72 may be formed on the main body 66 for engagement by a suitable wrench.

A neck portion indicated generally as 74 extends upwardly from main body 66, and is provided with a waisted central region 76, and a transverse through bore 78, communicating with the interior of the sleeve 62.

A drive head portion 80 extends above neck 74 and is provided with a screwdriver slot, or other drive means 82.

An annular locking recess 84 is formed between head 80 and neck 74 for receiving the locking ring 64.

Two spaced apart annular grooves or recesses 86 are provided above and below the waisted portion 76 for receiving typical O-rings 88 therein.

The O-rings 88 bear on the interior surfaces of the sleeves 62 and provide a good effective pressure tight seal above and below the waisted portion 76.

Such Tee junctions are particularly simple to assemble, by simply forcing the head 80 upwardly through the cylindrical sleeve 62. The resilient snap action of the material will permit the head 80 to pass upwardly through the locking rib 64 after which the rib 64 will snap into the groove 84 and lock the head against removal.

The entire neck 74 and body 66 are thus freely rotatable within sleeve 62, while being sealed against the possible loss of fluid or fluid pressure by means of the O-rings 88.

Thus it is possible if necessary to connect a hose into the fingers 18 in a manner described above, after which, if necessary, the main body 66 can be fastened in a suitable threaded recess adapted to receive threads 68 simply by rotation of head 80 by means of a screwdriver. Alternatively, a wrench can be used to rotate the structure by means of surfaces 72, is desired.

Even during use, the hose connection portion 60 can be swung around the neck 74 even while subjected to working pressures, without disturbing the seal.

**Claims**

1. A hose coupling for attachment to a hose and comprising a body portion (12) defining a bore (14); hose clamping fingers (18) having inner ends rooted to said body portion and having outer ends extending from said body portion, the body portion and the fingers being formed as a single integral piece unit; ridge means (28) around the exterior of said fingers adjacent said outer ends, said fingers defining a reduced cross-section from said ridge means to said inner ends; collar means (34) slidable axially along said fingers relative to the body portion and having an axially inner end including retaining means (38) for engaging the ridge means to keep the collar means captive on the fingers when slid axially away from the body portion, an axially outer end including an interior outer end portion acting in co-operation with the ridge means to squeeze the fingers together when the collar means is slid axially toward the body portion into a clamping position, and an intermediate interior portion (36) between said retaining means and said outer end portion of an enlarged diameter to fit loosely over the ridge means; interior tooth means (24) on said fingers arranged and located so as to engage the outer surface of said hose and to bite into it in use when the fingers are squeezed together by the collar means; and interior sealing sleeve means (22) of gradually reducing diameter for making sealing engagement with the outer surface of the hose in use, the outer end portion of the collar means including an interior angled surface (42) at the transition to said intermediate portion 36, characterised in that the ridge means includes a complementary outer angled surface (30) at its outer end, both said angled surfaces being axially outwardly tapered to provide a wedging action as the collar means is slid axially inwards toward the clamping position; and said outer end portion of the collar further includes a non-tapered interior surface (40) at its outer end and the ridge means includes a complementary non-tapered exterior surface (28) at its inner end which coact to keep the fingers squeezed together without exerting any axial forces on the collar means when the latter is at its axially inmost clamping position.

2. A coupling as in Claim 1 characterised in that said tooth means 24 are angled.

3. A coupling as in Claim 1 or 2 characterised by complementary locking recess (50) and rib (52) formations formed on said collar means and said clamping fingers, whereby to secure the same in clamping relationship when the collar means is at the clamping position.

4. A coupling as in Claim 1, 2 or 3 characterised by threaded connection means (16) formed on said body portion.

5. A coupling as in any preceding claim characterised by a generally cylindrical sleeve portion (62) formed on said body portion communicating with said bore, a rotatable body member (66) shaped and adapted to be received in the sleeve portion, locking means (64) for holding the body member in position, and sealing means (88) for sealing between the body member and the cylindrical sleeve portion.

6. A coupling as in Claim 5 characterised by a locking ridge (64) formed inwardly of said cylindrical portion, and a complementary locking recess (65) for receiving the ridge on said body member.

7. A coupling as in Claim 5 or 6 characterised by a neck portion (74) on said body member shaped and adapted to fit within the cylindrical sleeve portion and having a waisted region (76) therearound and a transverse bore (78) therethrough, and including upper and lower O-ring seals (88) mounted on said neck portion above and below the waisted portion.

8. A coupling as in Claim 5, 6 or 7 characterised by threaded fastening means (68) on said body member, and a bore (70) through said body member in communication with the transverse bore.

9. A coupling as in Claim 7 or in Claim 8 so far as dependent on Claim 7 characterised by a head portion (80) extending beyond said neck portion outwardly of said cylindrical sleeve portion, and drive surfaces (82) formed on said head portion for engagement by tool means.

**Patentansprüche**

1. Druckschlauchverbindung zur Anbringung an einen Schlauch, enthaltend einen Körperteil (12), der eine Bohrung (14) bildet; Schlauchklemmfinger (18) mit inneren Enden, die im Körperteil verankert sind, und mit äußeren Enden, die sich von diesem Körperteil aus erstrecken, wobei der Körperteil und die Finger als einzige, ganze Stückeinheit gebildet sind; eine Nasenausbildung (28) um das Äußere der Finger herum in der Nähe von deren äußeren Enden, wobei diese Finger von dieser Nasenbildung aus zu den inneren Enden einen reduzierten Querschnitt bilden; eine Kragenausbildung (34), die entlang der Finger relativ zum Körperteil axial gleitbeweglich ist und ein axial inneres Ende besitzt, das eine Rückhalteeinrichtung (38) für einen Eingriff mit der Nasenausbildung enthält, um die Kragenausbildung an den Fingern festzuhalten, wenn sie axial vom Körperteil weggeschoben ist, wobei ein axial äußeres Ende einen inneren äußeren Endabschnitt, der mit der Nasenausbildung zusammenwirkt, um die Finger zusammenzuquetschen, wenn die Kragenausbildung in axialer Richtung in eine Klemmposition gegen den Körperteil geschoben ist, sowie einen inneren Zwischenteil (36) zwischen der Rückhalteeinrichtung und diesem äußeren Endteil von vergrößertem Durchmesser enthält, um lose über die Nasenausbildung zu passen; eine an diesen Fingern vorgesehene innere Zahnausbildung (24), die so ausgebildet und angeordnet ist, daß sie im Gebrauch, wenn die Finger durch die Kragenausbildung zusammengequetscht werden, in die Außenseite das Schlauches eingreifen und darin einschneiden; sowie eine innere Dichtungshülseneinrichtung (22) mit sich allmählich reduzierendem Durchmesser zur Herstellung eines Dichtungseingriffes mit der Außenseite des Schlauches bei der Verwendung, wobei der äußere Endabschnitt der Kragenausbildung eine innere winklige oberfläche (42) im Übergang zu dem genannten Zwischenteil (36) enthält, dadurch gekennzeichnet, daß die Nasenausbildung eine komplementäre äußere winklige Oberfläche (30) an ihrem äußeren Ende enthält, wobei beide winkligen Oberfläche sich axial nach außen verjüngen, um eine Keilwirkung zu schaffen, wenn die Kragenausbildung axial einwärts in Richtung auf die Klemmposition geschoben wird, und daß der äußere Endabschnitt der Kragenausbildung ferner eine sich nicht verjüngende Innenseite (40) an ihrem äußeren Ende und die Nasenausbildung eine komplementäre, sich nicht verjüngende Außenseite (28) an ihrem inneren Ende enthält, die zusammenwirken, um die Finger ohne Ausübung irgendwelcher Axialkräfte auf die Kragenausbildung zusammengequetscht zu halten, wenn die Kragenausbildung sich in ihrer axial innersten Klemmposition befindet.

2. Druckschlauchverbindung nach Anspruch 1, dadurch gekennzeichnet, daß die Zahnausbildungen (24) winklig verlaufen.

3. Druckschlauchverbindung nach Anspruch 1 oder 2, gekennzeichnet durch komplementäre Verriegelungsausnehmungs- (50) und Rippen-Ausbildungen (52), die an der Kragenausbildung und an den Klemmfingern angeformt sind, um diese dadurch im Klemmeingriff zu halten, wenn die Kragenausbildung sich in der Klemmposition befindet.

4. Druckschlauchverbindung nach Anspruch 1, 2 oder 3, gekennzeichnet durch eine Gewindeverbindungseinrichtung (16), die an dem Körperteil gebildet ist.

5. Druckschlauchverbindung nach einem der vorhergehenden Ansprüche, gekennzeichnet durch einen im wesentlichen zylindrischen Hülsenteil (62), der auf dem mit der Bohrung in Verbindung stehenden Körperteil gebildet ist, ein drehbares Körperelement (66), das zur Aufnahme in den Hülsenteil geformt und angepaßt ist, ferner eine Verriegelungseinrichtung (64), um das Körperelement in Position zu halten, sowie eine Dichtungseinrichtung (88) zur Abdichtung zwischen dem Körperelement und dem zylindrischen Hülsenteil.

6. Druckschlauchverbindung nach Anspruch 5, gekennzeichnet durch eine Verriegelungsnase (64), die einwärtsgerichtet am zylindrischen Teil ausgebildet ist, sowie eine komplementäre Verriegelungsausnehmung (65) zur Aufnahme der Verriegelungsnase am Körperelement.

7. Druckschlauchverbindung nach Anspruch 5 oder 6, gekennzeichnet durch einen Halsabschnitt (74) an dem Körperelement, der zum Einpassen in den zylindrischen Hülsenteil geformt und ausgebildet ist und einen umlaufenden eingeschnürten Bereich (76) und eine durchgehende Querbohrung (78) aufweist, sowie obere und untere O-Ringdichtungen (88) enthält, die an diesem Halsabschnitt oberhalb und unterhalb des eingeschnürten Bereiches montiert sind.

8. Druckschlauchverbindung nach Anspruch 5, 6 oder 7, gekennzeichnet durch eine mit Gewinde versehene Befestigungseinrichtung (68) an dem Körperelement sowie eine Bohrung (70) durch dieses Körperelement in Verbindung mit der Querbohrung.

9. Druckschlauchverbindung nach Anspruch 7 oder 8, soweit er von Anspruch 7 abhängig ist, gekennzeichnet durch einen Kopfteil (80), der sich über den Halsabschnitt hinaus außerhalb des zylindrischen Hülsenteiles erstreckt, sowie Antriebsflächen (82), die am Kopfteil für einen Eingriff durch Werkzeuge angeformt sind.

**Revendications**

1. Raccord de tuyaux à monter sur un tuyau et comprenant une partie formant corps (12) délimitant un alésage (14); des doigts (18) pour le serrage du tuyau ayant des extrémités intérieures solidaires de ladite partie formant corps et ayant des extrémités extérieures qui s'étendent à partir de ladite partie formant corps, cette partie formant corps et les doigts constituant une seule pièce; des nervures (28) sur le pourtour extérieur desdits doigts le long desdites extrémités extérieures, lesdits doigts présentant une section transversale réduite depuis lesdites nervures jusqu'aux dites extrémités intérieures; un collier (34) pouvant coulisser axialement le long desdits doigts par rapport à la partie formant corps et ayant une extrémité axialement intérieure présentant un moyen de retenue (38) pour buter contre les nervures afin de maintenir le collier sur les doigts quand ou le fait glisser en l'écartant de la partie formant corps, une extrémité axialement extérieure comprenant une partie intérieure d'extrémité extérieure agissant en coopération avec les nervures pour resserrer les doigts ensemble quand on fait glisser le collier axialement vers la partie formant corps en l'amenant à une position de serrage, et une partie intérieure intermédiaire (36) entre ledit moyen de retenue et ladite partie d'extrémité extérieure d'un diamètre élargi pour s'adapter librement sur les nervures; des dents intérieures (24) sur lesdits doigts disposées et placées de façon à agir sur la surface extérieure dudit tuyau et à mordre dans ce tuyau quand les doigts sont resserrés ensemble par l'action du collier; et une douille d'obturation intérieure (22) d'un diamètre diminuant graduellement pour établir un contact d'obturation avec la surface extérieure du tuyau utilisé, la partie d'extrémité extérieure du collier présentant une surface intérieure oblique (42) à la transition avec ladite partie intermédiaire (36), caractérisé en ce que les nervures comprennent une surface oblique complémentaire (30) à leurs extrémités extérieures, lesdites deux surfaces obliques étant rétrécies axialement vers l'extérieur pour exercer un coincement quand on fait glisser le collier axialement vers l'intérieur jusqu'à la position de serrage; et ladite partie d'extrémité extérieure du collier comprend de plus une surface intérieure non oblique (40) à son extrémité extérieure et les nervures comprennent à leurs extrémités intérieures une surface extérieure (28) complémentaire non oblique qui agit pour maintenir les doigts resserrés ensemble sans exercer de forces axiales sur le collier quand celui-ci est à sa position de serrage axiale la plus intérieure.

2. Raccord selon la revendication 1, caractérisé en ce que lesdites dents 24 sont obliques.

3. Raccord selon la revendication 1 ou 2, caractérisé par un évidement (50) et une nervure (52) de blocage complémentaire formés sur ledit collier et lesdits doigts de serrage, de façon à immobiliser ceux-ci en position de serrage quand le collier est à la position de serrage.

4. Raccord selon la revendication 1, 2 ou 3, caractérisé par un liaison à filetage (16) établie sur la partie formant corps.

5. Raccord selon l'une quelconque des revendications précédentes, caractérisé par une partie formant douille généralement cylindrique (62) formée sur ladite partie formant corps en communication avec ledit alésage, un élément formant un corps rotatif (66) constitué et adapté pour être reçu dans la partie formant douille, un moyen de verrouillage (64) pour maintenir l'élément formant corps en position et un moyen d'obturation (88) pour établir un joint d'obturation entre la partie formant corps et la partie formant douille cylindrique.

6. Raccord selon la revendication 5, caractérisé par une nervure de verrouillage (64) formée intérieurement sur ladite partie cylindrique et un évidement de verrouillage complémentaire (65) pour recevoir la nervure sur ledit élément formant corps.

7. Raccord selon la revendication 5 ou 6, caractérisé par une partie formant col (74) sur ledit élément formant corps, établie et adaptée pour s'engager dans la partie formant douille cylindrique et ayant une région formant ceinture (76) comprenant des joints toriques supérieur et inférieur (88) montés sur ladite partie en col au-dessus et au-dessous de la partie en ceinture.

8. Raccord selon la revendication 5, 6 ou 7, caractérisé par un moyen de fixation fileté (68) sur ledit élément formant corps et un alésage (70) à travers ledit élément formant corps en communication avec l'alésage transversal.

9. Raccord selon la revendication 7 ou la revendication 8 en dépendance de la revendication 7, caractérisé par une partie de tête (80) s'étendant au-delà de la partie formant col en dehors de ladite partie formant douille cylindrique et par des surfaces d'entraînement (82) formées sur ladite partie formant tête pour un actionnement par un outil.

Fig.1.

Fig.2.

Fig. 3.

Fig. 4.

Fig. 5.

Fig. 6.

Fig.7.

Fig.8.